# EUROPEAN PATENT APPLICATION

(11) **EP 1 164 501 A1**
(43) Date of publication of application: **19.12.2001**
(21) Application number: 00981757.8
(22) Date of filing: 15.12.2000
(51) Int. Cl.: G06F 17/30, G06F 13/00

(54) **OPTIMIZED INFORMATION PROVIDER SYSTEM AND METHOD**

(30) Priority: 15.12.1999 JP 35627799
(71) Applicant: Benesse Corporation, Okayama-shi, Okayama 700-8686 (JP)
(72) Inventor: Kashihara, Nobuya, Benesse Corp. Tokyo Head Office, Tama-shi, Tokyo 206-8686 (JP); Shigematsu, Ikuya, Benesse Corp. Tokyo Head Office, Tama-shi, Tokyo 206-8686 (JP)
(74) Representative: Moir, Michael Christopher
(86) International application number: JP0008904
(87) International publication number: WO0144985

(57) **Abstract**

A system and a method for providing information that is optimized for each user in a desired format are provided. Upon receiving a request from a user, a retrieving unit (10) in an optimal information providing system starts retrieval in a personal information database (20) and an information contents database (30). The retrieving unit (10), in response to the request from the user, retrieves related information in the information contents database (30), deletes unnecessary information from the entire information obtained as a result of the retrieval based on the user's personal information obtained from the personal information database (20), adds to the retrieval results information that is considered to be of interest to the user judging from the user's personal information even if the information is not included in the retrieval results, and then provides optimal information to the user.

## Description

### BACKGROUND OF THE INVENTION

### 1. Field of the Invention

The present invention relates to an optimal information providing system and method. More specifically, the present invention relates to an information providing system and an information providing method for providing information, which is selected and edited such that contents and a form of the information are optimal for a user, in a format desired by the user when the user requests provision of the information.

### 2. Description of the Related Art

People need various kinds of information. The information required relates to various contents ranging from that relating to food, clothing, and shelter that are basic elements of living, hobbies and entertainment, medical care and health, social occurrences, regional events, press releases from national and local authorities, economic circumstances, politics, international state of affairs, and so forth.

As is evident from the fact that such classifications of contents of information correspond to pages of a newspaper and sorts of television programs, information has been supplied through the mass media represented by the press and television and then consumed. Normally, since the number of newspaper companies and television stations that are on the supplier side is relatively small, information of substantially the same contents has been supplied one-way to a large number of consumers from a small number of supply sources. A receiver of information can choose a supplier by, for example, selecting which newspaper to read and which television program to watch. The receiver has the freedom of selection in this regard. However, a supplier can only assume targets for supplying information as a whole based on attributes such as ages, genders, occupations and the like of receivers as well as a certain tendency common to the receivers. Therefore, in reality, it has been impossible to supply information considering personal circumstances of a receiver, and information has not actually been supplied in this manner.

Recently, the gross volume of information has been increased exponentially, and its contents are detailed and subdivided. Objective choices are becoming manifold in this sense. Concerning subjective circumstances on the receiver side, partly because of expanded self-awareness, it is not a general practice to receive what is given as it is, but more and more people are becoming able to afford, from both economic and psychological standpoints, to voluntarily choose from wider choices than before. As a result, sorts and scope of information that each individual actually obtains or wishes to obtain are becoming more diversified than before and, at the same time, are expanding; further, the situation wherein everybody receives similar information simultaneously and is satisfied with it is also changing. Nobody is satisfied with information that is neither necessarily clear nor precise in specifying to whom it is addressed, and which is filled with commonly preferred contents. As a result, nobody wants to obtain such information. Therefore, the supplier side is now becoming to make an attempt to send information after assuming receiver groups that are more subdivided than before and discussing more in detail than ever what is the optimal contents of information and what is the optimal form of sending information to the assumed groups. This tendency of individualization and diversification is notably found in television programs, magazines, advertisements and the like. The current situation in which bookstores and music shops are increasing in size, as are information magazines reflects such diversified desires of individuals for information.

In contrast to the above-mentioned one-way supply of the identical contents of information from the mass media, a person is provided with information individually by other people around him/her. For example, a person consults with a family member or a friend and, as a result, sometimes is given some answers or hints. It is possible that neighbors, colleagues in workplaces and relatives living apart who belong to slightly wider scope than family members or friends will be supply sources of information. In addition, it would also be a format of obtaining information to receive advises concerning specific problems from professionals such as doctor, lawyers and the like on their professional fields upon payment of considerations.

In obtaining information in such personalized and individualized manners, the disadvantages of the mass media that the format of supplying information is one-way and the same contents of information is supplied are overcome. However, since a supply source of information is basically an individual, whether or not information to be supplied is precise in relation to the situation of a receiver, comprehensive and exhaustive depends exclusively on a supplier, and a receiver is often unsatisfied with the obtained information. It is rather rare that a neighbor who individually and comprehensively provides information required by an individual always resides in an area accessible to the individual. In addition, in the current situation in which diversification and subdivision of information is occurring at a rate never experienced before, there are also circumstances in which supplies of precise information from individuals are becoming essentially difficult. This is true for provisions of information from friends or family members and, even in the case of obtaining information from professionals, it is well known that, for example, it is often difficult for a medical practitioner to make a decision based on the latest medical standard. The increase in the volume of information makes access to necessary information difficult, rather than the other way round.

The above-mentioned present situations concerning the sending and receiving of information are summarized as the following five subjects. (1) It has become more difficult to access desired information because of the rapid increase in the volume of information as well as the wide distribution of information. (2) Information is supplied in a form which includes many unnecessary elements that could be called noises because of the lack of individualization and also, when the information is supplied, the circumstances peculiar to respective receivers are not considered. (3) A method for issuing a request for information from a receiver of the information to a supplier is not clear. (4) A mechanism has not been established in which is constructed a database on the supplier side storing circumstances peculiar to receivers of information, that is personal information, in advance, and when supplying the information to a receiver, optimizes the information to be supplied for the receiver with reference to the constructed database. (5) A mechanism has not been established in which information with identical contents in a plurality of formats that a receiver desires is supplied.

These five subjects will be reviewed in more specific detail hereinbelow. As an example of the first subject that it is difficult to obtain desired information, a case in which books and materials relating to a specific issue will be considered. For example, it is assumed that a person has gone to a bookstore or a library to find out contents of a specific legal system. In this case, if texts of the law could be found in a compendium of laws and the like, but there were fifty books describing actual application of the system which was established by judicial precedents and the like, it would not be realistic to check all of these books. If the law or the legal system in question is of a foreign country or relates to an international treaty, there would be more difficulties because information sources are not limited to domestic ones and the number of suppliers increases significantly. Upon checking the concrete contents of the law using an Internet search engine, if too many sites are found, it is not easy to reach the information that is actually required. Although far more information is available than before and there is higher possibility that information that can be a reference exists somewhere, in reality, this situation is similar to the past when information did not exist at all in the first place.

Concerning the second subject that a lot of noises are included in information obtained, which relates to the above-mentioned first subject, a case in which a search is executed by inputting a keyword in the search engine on the Internet will be considered. Even if a search is executed using a retrieval conditional expression consisting of a product of many keywords and, as a result, a person can reach a plurality of Web sites, information is often obtained only in a form including unnecessary contents. This is because it is impossible to convert all the circumstances on the searcher side into keywords. It is not easy to remove noises and limit information to pieces that you actually desire. That a lot of pieces of information exist in a readily accessible state and information that actually desired is included therein is one thing; however, whether the desired information can actually be selected is another.

For example, let us assume an individual intends to learn English. In this case, current proficiencies in English, motivations of learning, target levels, desired methods of learning and lengths of time that can be freely used for learning vary from a person to another. It is not easy to advise which learning method is optimal considering such personal circumstances. This is because these detailed individual circumstances are hard to be put into retrieval keywords and, in a general search method, only information with a lot of noises is obtained, which is unnecessary and remotely related.

The third subject that a method of issuing a request from a receiver of information to a supplier is unclear does not seem to exist in the level where a keyword is inputted in a search engine on the Internet. However, as it is evident from experiences, work for selecting a keyword is not easy in itself. To put it in more basic terms, when an ordinary person faces a difficulty in his/her life and wishes to solve it, it is often unclear what is the problem and by what kind of knowledge and measures the difficulty can be resolved.

The fourth subject is concerned with the nonexistence of a personal information database. It is true that information on individuals is held by numerous administrative authorities including the police, credit check agencies, medical organizations, schools and the like, depending on sorts of the information; however, a database consolidating the information does not exist. It goes without saying that problems concerning privacy must be solved. However, when a certain organization is requested by an individual for some information, it would be convenient for the receiver of information if, after taking into consideration the individual's circumstances, the information were provided in a form in which any irrelevant information were; at the same time, accompanying contents that were not necessarily explicitly requested but assumed to be relevant in consideration of the individual's circumstances could added. For this purpose, if a comprehensive database such database could be utilized to optimize information to be provided for each receiver.

The fifth subject concerns the fact that, under the current situation, methods of supplying information and forms of supplying information are not always diversified. If it is possible to provide information, for example, by preparing a new booklet, via a facsimile, or online via the Internet, a user can select a desired form of providing information. In addition to the above, provisions of information in a form of being stored on a computer readable electronic medium such as a floppy disc, a CD-ROM, a DVD and the like can also be considered. Moreover, it would be convenient if requested information could be converted into various formats besides the various media. That is, since information exists in a specific form in general, it is provided in the existing form of existence. For example, information existing as text information is usually provided as text information as it is. However, if the character information could be provided as images, voices and the like, a user would be able to easily assimilate and understand the provided information.

Further, it is a requisite common to the above-mentioned five subjects to be solved that, when an ordinary person without a special knowledge faces some difficulty, the information he or she desires can be obtained easily and inexpensively. Namely, the information should be provided in a completely user-friendly format.

### SUMMARY OF THE INVENTION

In view of the above, with the conventional situations surrounding information as a premise, it is an object of the present invention to provide an information providing system and an information providing method for providing, upon request, information that is selected and edited in an optimized format in light of individual circumstances of a person requesting the information in a method desired by the person. In addition, an information providing system in accordance with the present invention is required to be a user-friendly system that enables a user to obtain desired information easily and promptly regardless of the user's age and degree of computer literacy.

In recent times, the development of computers and communication technologies has been based on the progress in the electronics and the semiconductor engineering, and individuals can purchase cellular phones and personal computers that function as communication terminals. Particularly, the propagation of the Internet is accelerating individualization of sending and receiving of information, and is changing the above-mentioned situations. Obtaining information via the Internet is different from obtaining information via the conventional style mass media or personal supply sources of information in the following points. First, once access is made to the Internet from a terminal, information can be obtained across regions and borders regardless of places where the terminal is located. Second, since countless WWW sites exist, information that has been conventionally monopolized by the news media and professionals and totally inaccessible to individuals can be easily obtained if a search engine is used properly. Third, costs required for obtaining information are extremely low. Fourth, it is possible to obtain information that satisfies individual desires of individuals to a considerable degree from various fields if a person belongs to a mailing list or a news group. Fifth, information can be supplied in a plurality of formats including not only text information but also images and voices, that is, via multimedia, over the Internet. Looking at these characteristics, the Internet can be considered accessing means to an interactive database and further an interactive database itself. The Internet has caused enormous information distributions in a worldwide scale, and is changing the conventional way of sending and receiving information.

On the one hand, there exist desires to obtain various kinds of information individually, and there is a progress in the computer technology including databases and the communication technology including the Internet as a basis on the other. In this context, the present invention provides a system that allows individuals to receive provisions of information in formats different from the conventional ones. The present invention is for providing, say, a virtual "wonderful neighbor" that gives precise information optimized for each individual considering personal circumstances that each individual has consciously or unconsciously.

According to the present invention, there is provided a system for providing optimized information to a user registered in advance in response to a request for provision of information from the user, comprising: inputting means for inputting the request for provision of information from the user; outputting means for outputting information to be provided to the user; a personal information database in which personal information relating to a plurality of users is stored in a retrievable format; a contents database in which information to be provided is stored; and retrieving means for retrieving information in the information contents database and forwarding the information obtained as a result of the retrieval to the outputting means in response to the request for provision of information from the user, wherein, when retrieving information, contents of the information are optimized using personal information relating to the user and stored in the personal information database by deleting information that is included in the retrieval results but is unrelated to the user and adding information that is not included in the retrieval results but is related to the user judging from personal data in the personal information database.

In the system according to the present invention, the inputting means and the outputting means can automatically input and output information via a plurality of means including paper media, telephones, facsimiles and the Internet.

In the system according to the present invention, each of the plurality of users can freely access personal information relating to himself/herself in the personal information database, but access to personal information relating to others is prohibited. Therefore, each user is given a password for accessing the system according to the present invention upon registering. In addition, each user can freely rewrite the personal information relating to himself/herself in the personal information database. In this sense, the personal information database according to the present invention has complete transparency with respect to each user.

In the system according to the present invention, use history data of the system by each user is continuously added and accumulated as personal information. The added and accumulated information is utilized in the subsequent retrievals. The system according to the present invention repeatedly learns every time it is utilized, thereby providing the optimal information based on the latest personal information. This is the function similar to the one with which a kana (Japanese syllable character) to Chinese character converting system used in a Japanese word processor learns to reflect use tendency and the like of a specific individual each time it is used.

In the system according to the present invention, a format of provision of desired information is included in the request for provision of information from the user. That is, the user can designate in which format he/she wants the information is to be provided when requesting the provision of information. It is not necessary to limit formats of provision to one.

In the system according to the present invention, if relating information does not exist in the information contents database when retrieving, the retrieval can be expanded to include relating WWW sites on the Internet.

### BRIEF DESCRIPTION OF THE DRAWINGS

In the accompanying drawings:
Fig. 1 is a schematic illustration of an optimal information providing system in accordance with the present invention;
Fig. 2 is a diagram illustrating details of a multi-in process that is a first characteristic of the system in accordance with the present invention;
Fig. 3 is a view of an example of a request card that a user is requested to fill in when requesting a proposal on a cooking menu;
Fig. 4 is a diagram illustrating an example of details of processing concerning a plurality of input formats in the multi-in process;
Fig. 5 is a block diagram illustrating an automatic editing process;
Fig. 6 is a diagram illustrating details of a multi-out process that is a third characteristic of the present invention;
Fig. 7 is a diagram of an example of details of processing concerning a plurality of output formats in the multi-out process;
Fig. 8 is a diagram illustrating an entire unified work flow management that is a fourth characteristic of the present invention; and
Fig. 9 is a diagram illustrating details of the work flow management.

### DETAILED DESCRIPTION OF THE PREFERRED EMBODIMENTS

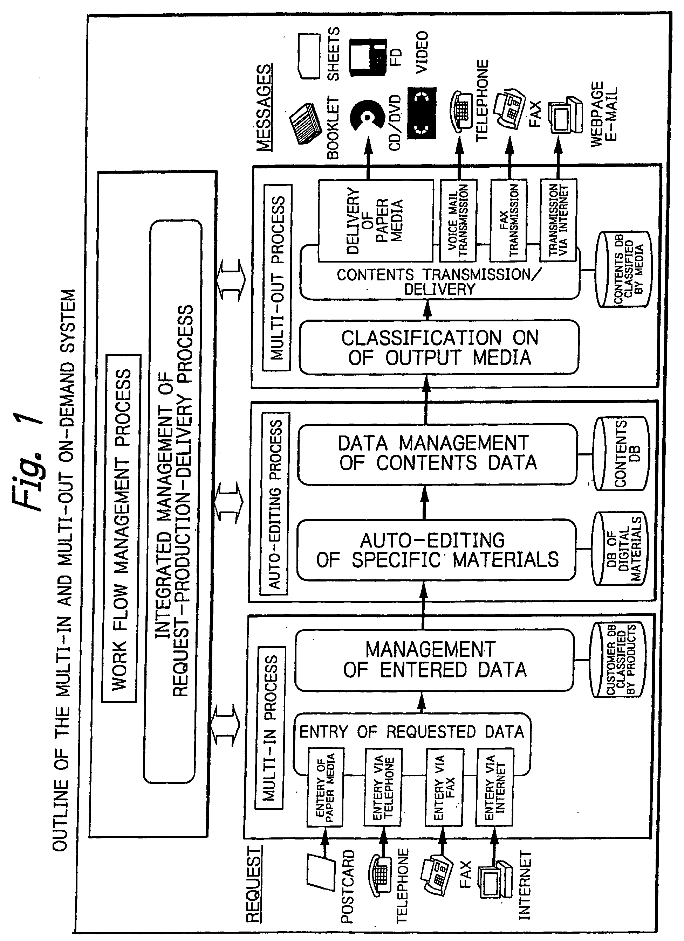

Fig. 1 schematically illustrates an optimal information providing system according to the present invention. As is evident from Fig. 1, the system according to the present invention has the following four processes as its characteristics. That is, the system according to the present invention is characterized by comprising: (1) a multi-in process for comprehensively receiving a request from a user via a plurality of media (multimedia); (2) an automatic editing processing for automatically editing information contents to be provided such that the information contents are optimized for the user based on request data from the user and a personal information database of the user which has been constructed in the system in advance; (3) a multi-out process for providing the user of the automatically edited information contents via the plurality of media; and (4) a work flow managing process for centrally managing a work flow consisting of the above-mentioned series of processes in a unified manner.

In principle, if an individual wishes to have an information contents providing service according to the present invention offered, he/she subscribes to the information providing system and is registered. In subscribing, the individual submits personal information to be a basis of automatic editing of information contents to the system. In addition, with repeated utilization of the system, use history data may be accumulated as personal information. This is because tendency of use itself is meaningful as personal information. Optimal information can be retrieved and edited based on the latest personal information including the accumulated history data. A person other than a subscriber registered in advance may input personal information for the one time use only in the system and request retrieval as a guest user. On this occasion, the person may request that the personal information used for optimization of retrieval results should not be stored in the system after the optimization.

In the system according to the present invention, a subscriber can at anytime freely check which personal information on himself/herself the system has, and can change the personal information if so desires. In order to ensure subscribers' trust in the system according to the present invention, it is desirable that a subscriber can manage information on himself/herself by him/herself, namely, from the opposite perspective, the system offers complete transparency to a specific subscriber concerning the personal information to be collected by the system with respect to the subscriber. The system according to the present invention is characterized in that provision of information can be performed as requested by the subscriber as well as individually. Accuracy of personal information referred to in the automatic editing process for this purpose is a factor in determining the degree of optimization of information to be provided. In addition, if a subscriber is provided with information that reflects personal information such as a clinical history that the subscriber has no memory of submitting, he/she might not trust the system any longer and will hesitate to use the system afterwards. Therefore, it is desirable that a so-called information privacy right is completely guaranteed in order for the system according to the present system to be relied upon and utilized widely. For this purpose, it is most important that users are requested to fully take the responsibility of managing their own personal information. This is not only an abstract ideal but is useful for efficient functioning of the system according to the present invention. A system for accumulating personal information already exists. However, a vertical power relationship usually exists between a system side and an individual side and, in this case, an individual cannot see what kind of personal information the system has collected and to which extent. Consequently, such a system is not voluntarily used, and an unused system is left neglected and stops functioning. On the other hand, the system according to the present invention will be utilized a considerable number of times by many people; this makes the database of the system substantial and, further, reduces the costs for using the system. Concerning personal information which is collected and accumulated by the system with respect to a subscriber, it is desirable that complete transparency is maintained to the subscriber, and that revisions and changes to the personal information can be freely made by the subscriber. It is further desirable that a mechanism for prohibiting access to personal information on other subscribers is prepared. More concretely, when the subscriber accesses a server, strict personal identification utilizing a password or a public key is carried out, and necessary processing such as encryption is executed when the personal information is transmitted. Such security measures are adopted in order to facilitate greater use of the system, as well as gain the user's trust through guarantee of the information privacy right, to thereby further proceed with equipping and expansion of the system.

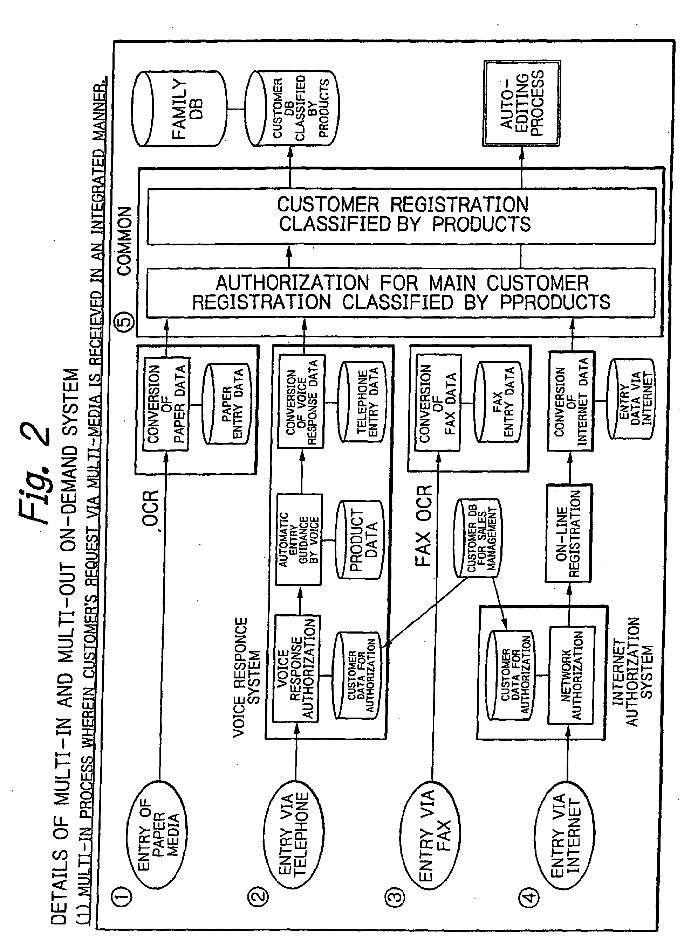

Fig. 2 will now be referred to. In Fig. 2, details of a multi-in process that is a first characteristic of the present invention is illustrated. In the system according to the present invention, a user requiring some information can make a request to a server on an information supplier side by a desired method out of a plurality of options. In Figs. 1 and 2, input by a paper medium such as a post card, input by voices using a telephone, input using a facsimile, and input by an electronic mail via the Internet are shown. When a telephone is used, it is possible to input data not only through the voices, as is usually carried out but also by pressing buttons on a push-button phone in accordance with an instruction from the server side.

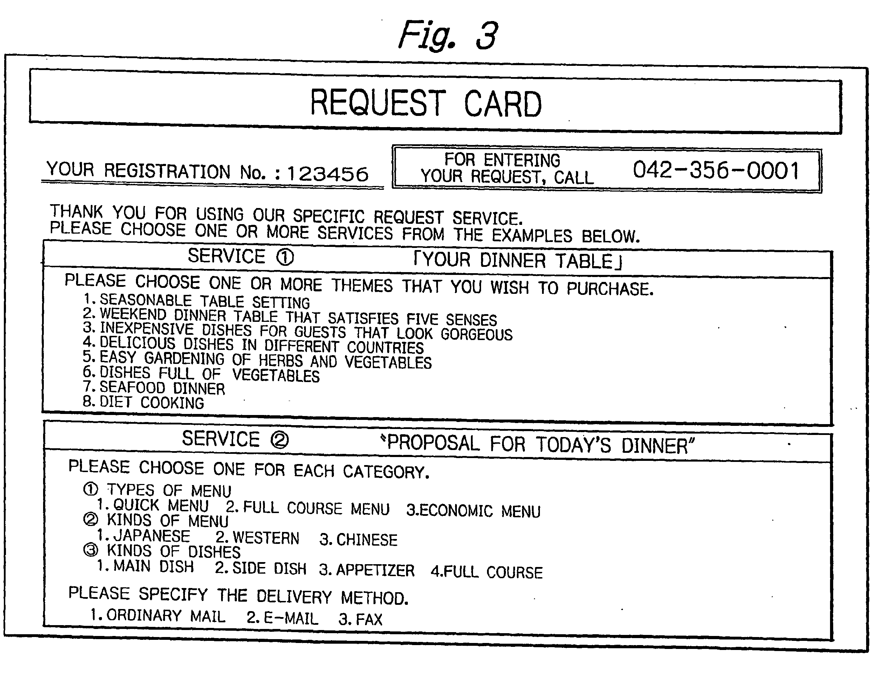

As an example, let us assume that a housewife who is a subscriber of the information providing system wishes to receive a proposal concerning a cooking menu. An example of a request card that she is required to fill in is shown in Fig. 3. Such a request card is distributed to subscribers in advance, and is mailed or transmitted via a facsimile after a subscriber has supplied the requested information. Audio input is possible by reading out aloud the requested information to an automatic voice response system on the system side. Alternatively, it is also possible for a subscriber to fill in a virtual request card displayed on a monitor and transmit a request on-line by accessing a WWW site on the Internet established by the information providing system side. Principally, in the system according to the present invention, a request from a subscriber is in any case automatically received without any human intervention.

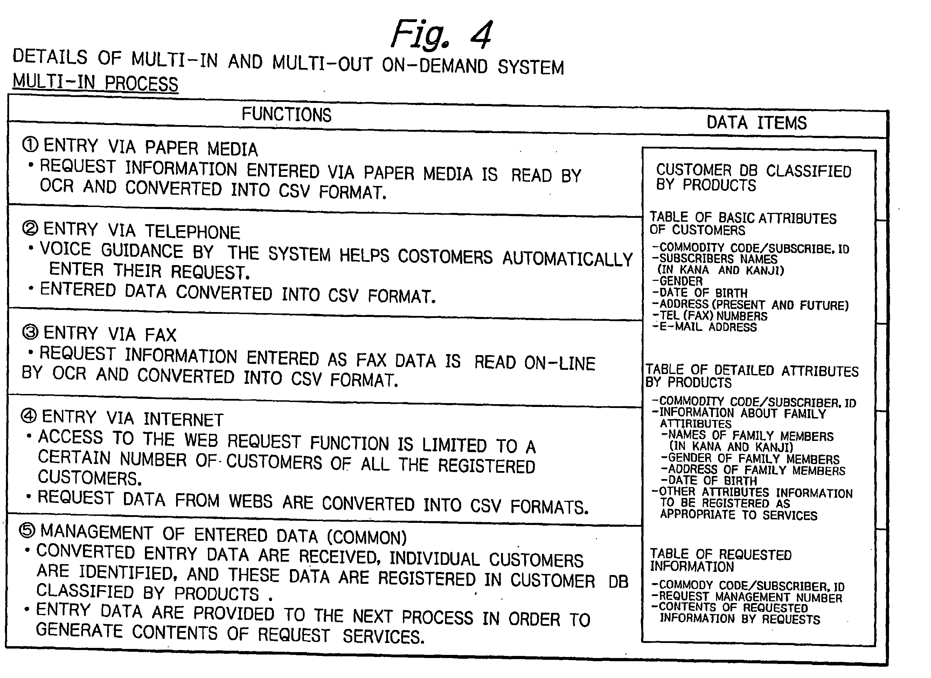

In Fig. 4, an example of details of processing concerning a plurality of input formats in the multi-in process is illustrated diagrammatically.

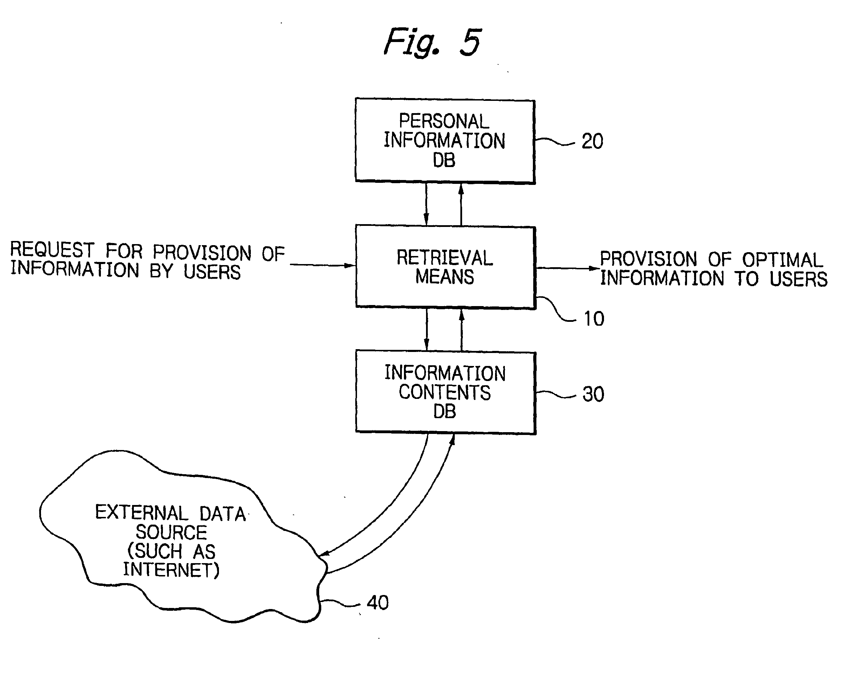

Fig. 5 is a block diagram illustrating an outline of an automatic editing process. When receiving a request for provision of information from a user, retrieving means 10 in the optimal information providing system according to the present invention starts retrieval in a personal information database 20 and an information contents database 30 in response to the request. More concretely, the retrieving means 10, which is a database managing system (DBMS), retrieves related information in the information contents database 30 in response to the user's request, deletes unnecessary information from the entire information obtained as a result of the retrieval based on user's personal information obtained from the personal information database 20, and adds to the retrieval requests information that would interest the user judging from the personal information of the user even if it is not included in the retrieval results. The information optimized in this way is provided to the user. Wide variety of information is required to be secured in the information contents database 30. For this purpose, it can be considered, for example, to store in advance contents information such as that of books and magazines published in the past, and update the data every time a new book or a new magazine is published. In addition, the database does not need to be a closed system. The database can be maintained in an open state that allows access to an external data source 40 by only storing URLs of related WWW sites rather than incorporating all pieces of obtainable information in the database itself. In this way, it is made possible to maintain an ability to provide a lot of information while restricting utilization of hardware and software within a fixed limit.

Information optimization in the automatic editing process will now be described in accordance with a concrete example. The information optimization by the system according to the present invention can be applied to (1) the above-mentioned case in which a proposal concerning a cooking menu is requested. In addition, the information optimization can be applied to many cases such as (2) a case in which a proposal of a destination of a family trip is requested, (3) a case in which exercises are requested in order to prepare for a term exam, (4) a case in which a high school student wishing to go to a university or a university student wishing to go to a graduate school is searching a university or a graduate school that is excellent in a specific field, and (5) a case in which a home for the aged meeting specific conditions is being searched for. The information providing system side can prepare various cooking menus including these cases and prepares request cards corresponding to the respective cooking menus. Since it is of course difficult to meet all of the various requests from every subscriber, a subscriber can inquire about availability of information contents that are not included in the cooking menus.

The system according to the present invention optimizes information contents to be provided for a subscriber requesting the information by considering individual circumstances that are associated with the subscriber. Therefore, it is considered that a request whose output varies as a result of taking into consideration personal information would be most suitable for the processing by this system.
(1) In the case of requesting a proposal of a cooking menu, if the system side has personal data such as the number of people eating, for example members of a family, their tastes, health conditions, and ages, such personal data would be useful for optimizing information. Inserting a caption such as "such a cooking menu is appropriate for A who wants to lose weight", "two year old B would love this taste and eat a lot", and "even C who dislikes vegetables can have a lot of vegetables with this cooking menu" using actual names of family members when explaining about the proposed cooking menu will be useful for emphasizing that the information is not general information for everybody but information that is optimized for a specific user. If a child in the family is allergic to a specific food or environment, informing the system side of this fact allows the system to take it into account when proposing a cooking menu.
   It is also possible to provide advertisements of new cooking utensils etc. and non-perishable foods, introduce a sports club in the neighborhood of the specific user, together with the provision of information concerning dishes. Another examples of optimizing contents would be to introduce a lunch menu in a restaurant in the neighborhood with an invitation such as "How do you like dining out occasionally?". In general, contents of an advertisement are determined for readers or viewers of whom assumptions are collectively made with respect to a medium in which the advertisement in inserted. However, according to the system of the present invention, an advertisement that is considered to be most appropriate from a request and personal information can be inserted simultaneously with providing information.
(2) In a case in which a proposal on a destination of a family trip is desired, contents of the proposal would be different, depending on, for example, an approximate budget, a family size (ages of a husband and a wife, existence and the number of children), preferences of foods (marine products or other products), preferences of destinations (a city style resort or a hot spring resort in a remote area), desired sightseeing facilities (places of historical interest or amusement facilities); whether the family likes sports or not; the distance from the place where the family lives (Is the family willing to travel to a distant location or would it prefer a closer location?); and preference of transportation means (car or public transportation). By receiving the above-mentioned information and performing retrieval using data accumulated in a personal database, the system can save time and reduce efforts to find a destination at a travel agency.
(3) If a junior-high school student desires to obtain anticipated questions of a term exam, what matters will be sorts of text books used, fields that the student is good at or weak in, and fields of questions in the previous exam. The system according to the present invention can appropriately point out on which subject and in which field the student should concentrate to prepare for the exam using the past performance data of the student, if the data is accumulated in a personal database. In this way, study advice similar to a personal consultation provided by a professional counselor are made possible.
(4) If a high school student wishing to go to a university or a university student wishing to go to a graduate school is searching for a university or a graduate school that is excellent in a specific field, various elements control the proposal: in which specific field the student wishes to study; what the student hopes to do in future, how high the current scholastic ability of the student is; what sort of school and in which region the student wishes to go; whether the student is interested in domestic schools only; if studying abroad is acceptable, which language should be used in classes; and how much tuition fees the user can afford to pay. Although a guide of a university or a graduate school is usually provided in the form of a booklet, such a general guide does not always disclose information actually required by people intending to go to university or graduate school in light of their individual concrete desires. If one chooses a school based only on not-so-specific information, this might result in disappointment. Some examples, a person who wishes to study modern French literature applies for P university with a French literature department only to find out later that the French literature department has only one professor specializing in the medieval period; an undergraduate student of mathematics with a strong interest in number theory applies to the graduate school of Q university only to find out that a professor who is known as renowned expert of number theory there is to retire in one year. Such detailed information is hard to find in a general school prospectus. In such a situation, if personal information of the user can be utilized by the system side, an appropriate proposal would be possible.
(5) Then, searching for a home for the aged meeting specific conditions is considered. In this case, it is necessary to designate detailed conditions such as the following: who wishes to enter; health and mental condition of the person who wishes to enter; how much an entrance charge is payable, a home in which region and of what size is desired; and what kind of room is desired. Retrieval results will be provided considering personal data of the person who wishes to enter the home as well as availability of vacant rooms of existing homes.

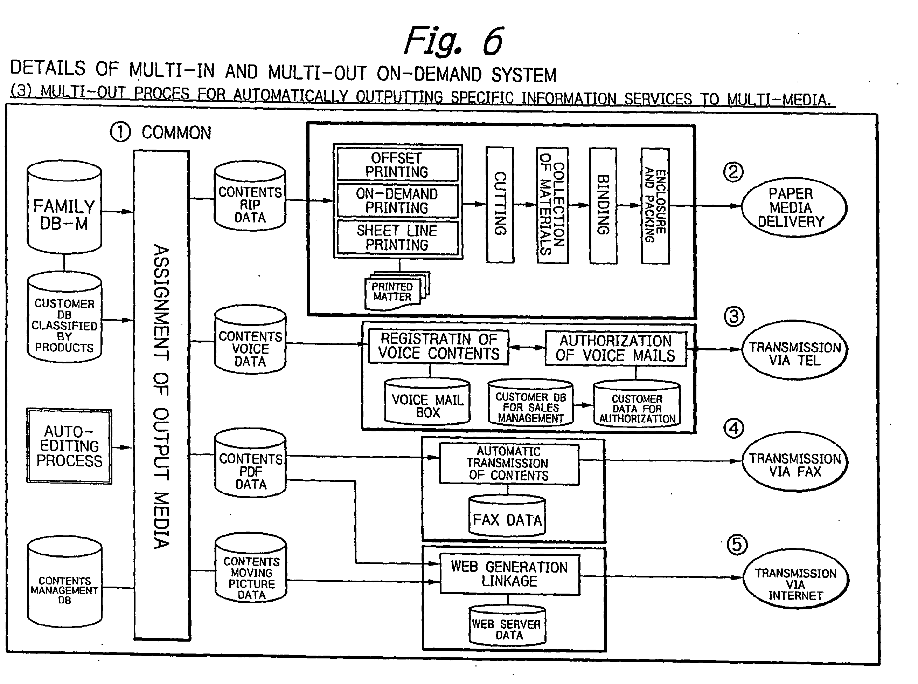

Fig. 6 is a diagram illustrating details of a multi-out process that is a third characteristic of the present invention. In the system according to the present invention, a user to be provided with information can receive the information by a desired method among a plurality of options. In Fig. 6 are illustrated the following: output by a paper medium such as a sheet and a booklet; output by voices using a telephone; output using a facsimile; and output by an electronic mail via the Internet. Here, if output is a booklet, an individual printing system similar to a printing machine used in on-demand publishing that is being realized in Japan and overseas recently is used. In the multi-out process of the system according to the present invention, only one fragment of publication is printed in response to an individual request, whereas in the case of the on-demand publishing, a small number of copies are produced.

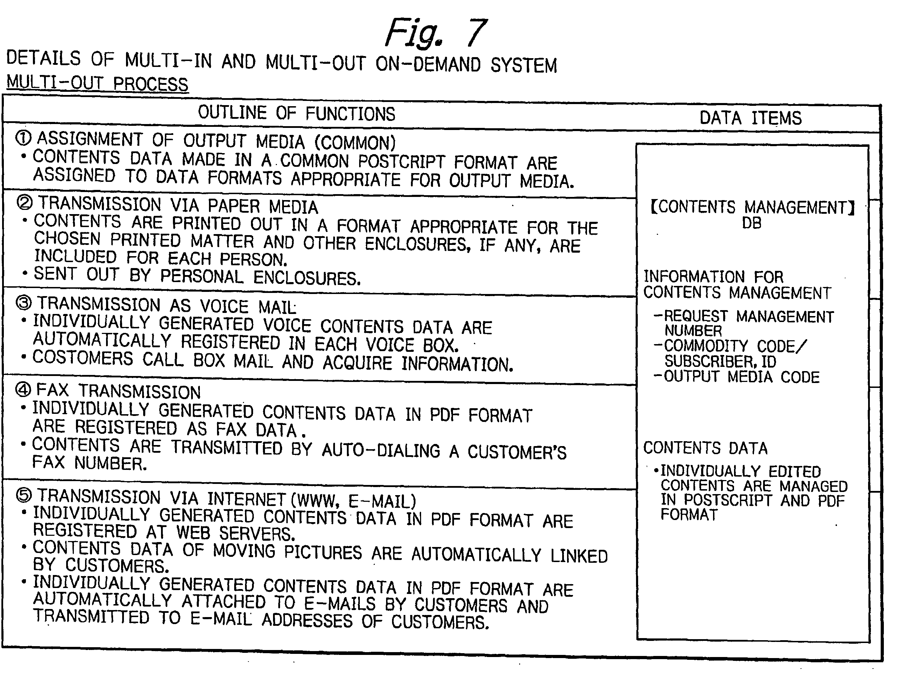

Fig. 7 is a diagram showing an example of details of processing concerning a plurality of output formats in the multi-out process. The system according to the present invention can provide information in a variety of formats; it can also utilize a plurality of formats in inputting information. That is, retrieval is performed in two databases, and information optimized as a result of automatic editing is provided to a user who requests the information using one of a plurality of means such as a booklet, a voice mail, a facsimile transmission, and an electronic mail.

A booklet in this context means one piece of printed matter prepared solely for the user and based on the request from the user and the user's personal information stored in the personal information database. In contrast to ordinary books and magazines that are media for a large number of readers, the booklet described here is for only one person, i.e., the user who has made the request. As described already, this booklet is printed and bound after contents of each page are optimized in view of the request from the user and the user's personal information by the above-mentioned automatic editing process. It is also possible to insert an advertisement whose contents are also optimized in each page. In addition, the number of booklets is not limited to one but may be plural, or may be enclosed with other general books or magazines. These paper media are delivered to the user by mail or a courier service. When sending the media, it is preferable to automatically process destinations and the like utilizing identifying means such as a bar code. Other than paper media, any medium that can store information such as a floppy disc (FD), a CD, a DVD, an MO, a cassette tape, an MD, a VTR can be used as a format of providing information in accordance with the present invention. It is also possible to provide information by using a plurality of media simultaneously in one provision of information.

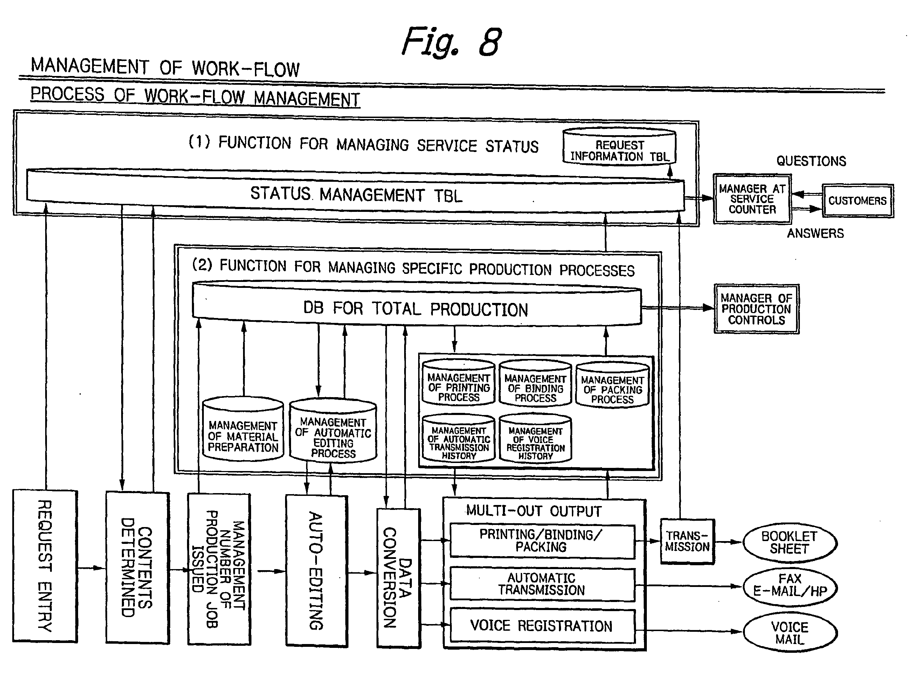

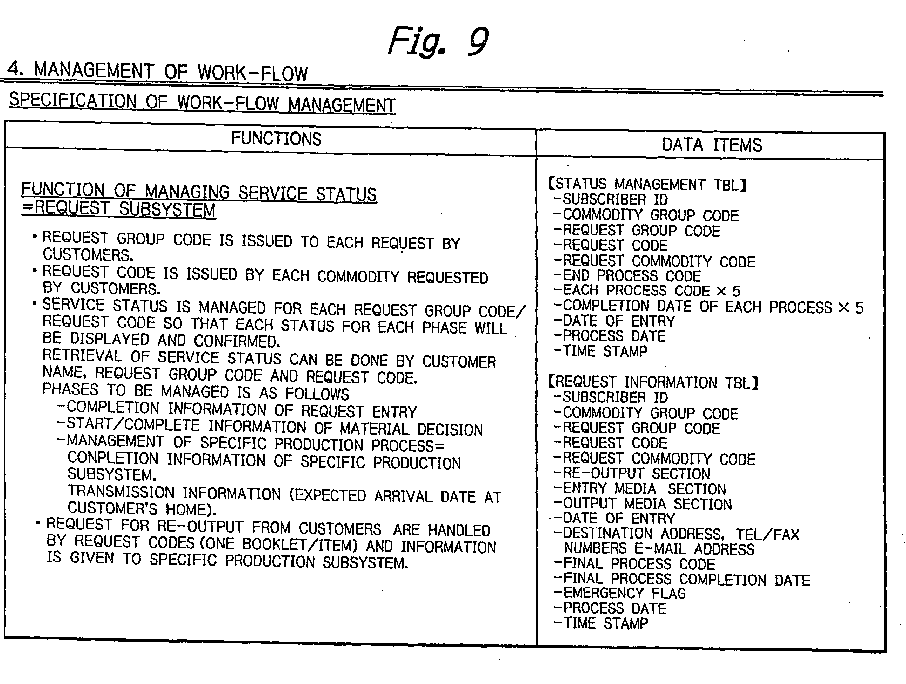

An entire unified workflow management that is a fourth characteristic of the present invention is illustrated in Fig. 8. In the system according to the present invention, all of the above-described (1) multi-in process, (2) automatic editing process, and (3) multi-out process are comprehensively managed and controlled as one work flow, which functions as one system. Details of the work flow management illustrated in Fig. 8 are shown diagrammatically in Fig. 9.

As described above in detail, the optimal information providing system according to the present invention makes it possible to provide information optimized for each user in a format desired by the user. This is attained by optimizing retrieval results using a personal information database that is accumulated in advance and substantiates itself by repeatedly learning each time it is utilized. This is totally unlike the conventional way of providing information in which a target is not necessarily clear.

In addition to the optimality nature of contents, it is also important that utilization of the system according to the present invention does not require special knowledge. Therefore, according to the system of the present invention, desired information can be easily, promptly and inexpensively obtained regardless of the user's age or degree of computer literacy.

Thus, it is seen that an optimal information providing system and method are provided. One skilled in the art will appreciate that the present invention can be practiced by other than the preferred embodiments which are presented for the purposes of illustration and not of limitation, and the present invention is limited only by the claims which follow.

## Claims

1. A system for providing optimized information to a user in response to a request for provision of information from the user, comprising:
inputting means for inputting the request for provision of information from the user;
outputting means for outputting information to be provided to the user;
a personal information database in which personal information relating to a plurality of users is stored in a retrievable format;
an information contents database in which providable information is stored; and
retrieving means for retrieving information in said information contents database and forwarding the information as a result of the retrieval to said outputting means in response to the request for provision of information from the user, wherein, when retrieving information, contents of the information are optimized using personal information relating to the user and stored in said personal information database.

2. A system according to claim 1, wherein said inputting means and said outputting means are capable of automatically inputting and outputting information via a plurality of methods including a paper medium, a telephone, a facsimile, a CD, an MO, a DVD, a floppy disc, an MD, a VTR and the Internet.

3. A system according to claim 1 or 2, wherein said personal database is always updated to catch up the latest state by having use history data of the system by each user added and accumulated therein, and is utilized in retrievals thereafter.

4. A system according to claim 3, wherein the latest personal information database is utilized, in addition to other uses, such that information unrelated to the user is deleted and information related to the user is added when retrieval is performed.

5. A system according to any one of claims 1 through 4, wherein desired format of provision of information is included in the request for provision of information from the user.

6. A system according to any one of claims 1 through 5 further comprising means for, if related information does not exist in said information contents database when the retrieval is performed, expanding retrieval operation to related WWW sites on the Internet and other sources.

7. A method for providing optimized information to a user registered in advance in response to a request for provision of information from the user, comprising the steps of:
inputting the request for provision of information from the user;
providing a personal information database in which personal information relating to a plurality of users is stored in a retrievable format;
providing an information contents database in which information to be provided is stored;
retrieving information in said information contents database in response to the request for provision of information from the user, contents of the information being optimized using personal information relating to the user and stored in said personal information database when retrieving information; and
outputting retrieval results to the user.

8. A method according to claim 7, wherein the request for provision of information and the provision of retrieval results are performed via a plurality of methods including a paper medium, a telephone, a facsimile, a CD, an MO, a DVD, a floppy disc, an MD, a VTR and the Internet.

9. A method according to claim 7 or 8, wherein use history data of the system by each user is added and accumulated in said personal database, and is utilized in retrievals thereafter.

10. A method according to claim 9, wherein the latest personal information database is utilized, in addition to other uses, such that information unrelated to the user is deleted and information related to the user is added when retrieval is performed.

11. A method according to any one of claims 7 through 10, wherein desired format of provision of information is included in the request for provision of information from the user.

12. A method according to any one of claims 7 through 11, further comprising a step of, if related information does not exist in said information contents database when the retrieval is performed, expanding retrieval operation to related WWW sites on the Internet and other sources.
